Europäisches Patentamt

European Patent Office

Office européen des brevets

(11) Publication number: **0 205 707
B1**

# EUROPEAN PATENT SPECIFICATION

(45) Date of publication of the patent specification:
01.03.89

(51) Int. Cl.⁴: **B 29 D 23/22**, B 29 C 35/02 //
(B29K21/00, B29L23:22)

(21) Application number: 85308495.2

(22) Date of filing: 21.11.85

(54) **Method of continuously vulcanizing hoses.**

(30) Priority: 17.06.85 JP 131515/85

(43) Date of publication of application:
30.12.86 Bulletin 86/52

(45) Publication of the grant of the patent:
01.03.89 Bulletin 89/9

(84) Designated Contracting States:
DE FR GB IT

(56) References cited:
DE-A- 1 965 670
GB-A- 1 074 909
GB-A- 1 358 273
US-A- 3 883 384

(73) Proprietor: **Kabushiki Kaisha Meiji Gomu Kasei, 10-2,
Nishi-shinjuku 1-chome, Shinjuku-ku Tokyo (JP)**

(72) Inventor: **Sejimo, Akinobu, 182-7, Nishitawara,
Hadano-shi Kanagawa-ken (JP)**
Inventor: **Ono, Shigeo, 742-15-1-110, Chimura,
Hadano-shi Kanagawa-ken (JP)**

(74) Representative: **Higgins, Michael Roger et al, MARKS &
CLERK 57/60 Lincoin's Inn Fields, London WC2A 3LS
(GB)**

## Description

The present invention relates to a method of continuously vulcanizing rubber hoses, including hoses reinforced with fibers.

In the prior art vulcanization of fiber-reinforced rubber hoses has had to be conducted in a vulcanizing tank maintained at a high temperature under a given pressure to prevent foaming of rubber during vulcanization. As a method for pressurizing the outer periphery of a hose to prevent foaming of rubber, a vulcanizer can which can be pressurized is commonly used. Or the outer periphery of a hose is covered with synthetic resin or lead, upon which pressure is applied. Even when a vulcanizer can is used, if the outer periphery of the hose is not covered at all, the surface may become roughened although foaming itself can be prevented and so-called eruptions may be formed, impairing the appearance. It is therefore a general practice to use cloth, lead, synthetic resin and the like as the covering.

The conventional vulcanizing methods have the following problems. It is necessary to cover the outer periphery of a rubber hose with cloth, synthetic resin, etc. to obtain a hose having smooth and lustrous surface even when a vulcanizer can which can be pressurized is used. Further, since a vulcanizer can must be tightly closed applying pressure, it is difficult to carry out continuous vulcanization.

When the outer periphery of the unvulcanized rubber hose is covered with lead for heating and vulcanization, it requires not only careful handling of the lead but entails increased equipment and operation expenses to thereby push up the product cost.

US-A-3 883 384 discloses a method of continuously vulcanizing hoses, comprising the steps of the opening part of claim 1 which consist of:

(a) covering the outer periphery of an extruded unvulcanized rubber hose with a heat-resistant resin layer which has a melting point higher than the vulcanizing temperature,

(b) maintaining the rubber hose at an elevated temperature in a hot vulcanizing tank until vulcanization is completed by heat conduction of the heating medium in the tank, and

(c) removing the heat-resistant resin layer and an inner mandrel.

When synthetic resin is used for covering the unvulcanized rubber hose, the resin becomes softened as the vulcanizing temperature rises. Proportionate to the increased degree of softening, the force of resin becomes lowered, which force is necessary to prevent foaming of the rubber. In order to prevent this drop in the resin force at the time of high temperature vulcanization, it is necessary to provide sufficient thickness in the resin layer, or to vulcanize in a vulcanizer can under pressure (as in US-A-3 883 384).

However, the thicker the resin layer, the longer it takes for the unvulcanized rubber hose to reach the vulcanizing temperature. This will extend the time required for vulcanization of the rubber hose. Moreover, the thicker the resin layer, the higher the cost of the product. Even if the resin layer is made sufficiently thick, it is still necessary to maintain the vulcanizing tank at the prescribed temperature and pressure in order to carry out continuous vulcanization. In this case, sealing of the vulcanizing tank is difficult and the resultant overall vulcanizing apparatus becomes complex in structure making the system impractical.

The present invention seeks to provide a method of continuously vulcanizing rubber hoses under normal pressure while preventing foaming of the unvulcanized rubber.

According to the invention, the resin layer has a low microwave absorption loss, after step (a) and before step (b) the rubber hose is heated in a microwave vulcanizing tank to subject the rubber to initial vulcanization, and in step (b) the rubber hose is maintained under normal pressure.

The invention will now be more particularly described, by way of example, with reference to the accompanying drawings, in which:

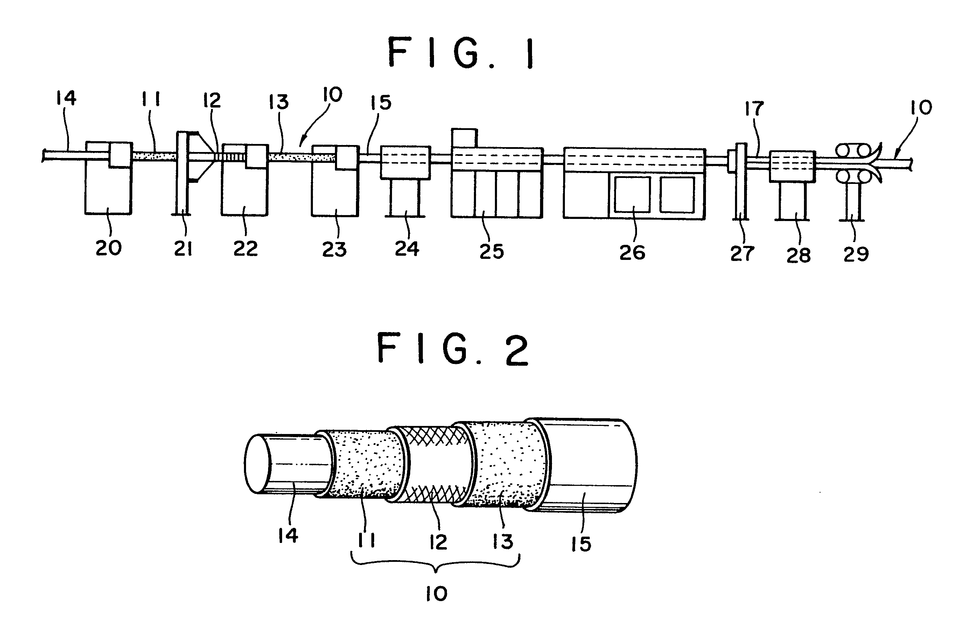

Figure 1 is a flow chart illustrating the steps of one embodiment of a method according to the present invention; and

Figure 2 is a partially exploded end view of a rubber hose.

Referring to the drawings, a rubber hose 10 manufactured according to an embodiment of the present invention comprises an inner rubber tube 11, a reinforcing layer 12, and an outer rubber tube 13. The inner tube 11 and the outer rubber tube 13 may be made of natural rubber or of various synthetic rubber compounds depending on the use of hose. In the reinforcing layer 12, steel wire or synthetic fiber is arranged as braid or in spiral. As shown the rubber hose has only one reinforcing layer, however, a plurality of such layers are generally provided depending on the pressure at which the rubber hose is to be used. In the case where a plurality of reinforcing layers are provided, an intermediate rubber layer is interposed between adjacent reinforcing layers to enhance the bonding.

Reference numeral 14 denotes a flexible mandrel made of synthetic resin, the outer diameter thereof corresponding to the inner diameter of the hose to be manufactured.

Reference numeral 15 denotes a synthetic resin layer to be provided over the outer periphery of the outer rubber tube 13 at the time of vulcanization. The layer 15 is low in microwave absorption loss and has a melting point higher than the vulcanizing temperature.

When vulcanization is completed, the flexible mandrel 14 is taken out and the resin layer 15 is peeled off and removed. The flexible mandrel 14 and the resin layer 15 are therefore not component parts of the rubber hose, but they are illustrated as integral parts of the hose to facilitate understanding.

The method by which the hose is vulcanized will now be described.

First, as in the conventional continuous vulcanization, the inner rubber tube 11 is extruded on the flexible mandrel 14 using an extruder 20. After the reinforcing layer 12 is braided on the outer periphery of the extruded inner tube 11 using a braider 21, the outer rubber tube 13 is extruded over the entire surface of the reinforcing layer 12 to completely and tightly cover the same. It is preferable to coat adhesive on the reinforcing layer 12, if necessary, an dry the adhesive using a dryer 22 before covering with the outer tube.

Next, using a resin extruder 23, the resin layer 15 is provided tightly over the outer periphery of the outer rubber tube 13 in a uniform thickness. Resins such as polytetrafluoroethylene or polymethylpentene which have small microwave absorption loss and are heat-resistant are used for extrusion of the resin layer 15. The resin layer 15 is applied in a thickness which is sufficient to prevent foaming of the rubber during the subsequent vulcanization by microwaves, for example 1 mm to 2 mm. The layer 15 does not adhere to the rubber hose material.

Since the resin layer 15 thus extruded from the extruder 23 is too hot and is easily deformed, it is passed through a cooling tank 24 for cooling and hardening.

After the resin layer 15 has been cooled and hardened, the unvulcanized rubber hose 10 is placed in a microwave vulcanizing tank 25.

Vulcanization in the microwave vulcanizing tank 25 is carried out to prevent softening of the resin and to vulcanize/cure the rubber to a certain extent. That is, microwaves in the microwave vulcanizing tank 25 selectively heat the unvulcanized rubber hose to a vulcanizing temperature and cures the same for so-called initial vulcanization. Since the resin layer 15 is made of heat-resistant resin which is low in microwave absorption loss, it is not likely to generate heat or soften, and the unvulcanized rubber hose alone can therefore be heated. Moreover, as the resin layer 15 itself is thus cured in close contact with the rubber hose, it is capable of preventing foaming of the rubber during curing.

After the unvulcanized rubber hose is selectively heated to vulcanizing temperature in the microwave vulcanizing tank 25 and the rubber is cured by the initial vulcanization, the hose is immediately transferred to a vulcanizing tank 26 (LCM, PCM, HAV) which is maintained at an elevated temperature under normal pressure. Vulcanization is completed by means of heat-conduction of the vulcanizing medium while the resin layer is softened at the same time.

In other words, although it requires heating over a prescribed period of time to completely vulcanize rubber, the rubber hose is subjected to initial vulcanization in the microwave vulcanizing tank 25. The rubber hose thus cured is maintained at an elevated temperature for a given period of time by heat conduction of the heating medium in the vulcanizing tank 26. Vulcanization of the rubber hose is completed by this heating in the vulcanizing tank 26. In the meantime, since the rubber has already been cured during the initial vulcanization in the microwave vulcanizing tank 25, there will be no foaming of the rubber as a result of the heat applied in the vulcanizing tank 26.

Therefore, although the resin layer 15 softens due to heating in the vulcanizing tank 26, is is not necessary to prevent foaming of the rubber in this case, and softening of the resin layer 15 will not affect the vulcanization. Rather, heating in the vulcanizing tank 26 is preferable as it makes it easier to subsequently peel off the resin layer 15 from the hose.

After vulcanization in the vulcanizing tank 26 is completed, the rubber hose 10 is passed through a grooving machine 27 to make a continuous incision 17 in the resin layer 15 along its longitudinal extent to a depth not reaching the surface of the hose 10. After cooling same with water in a cooler 28, the resin layer 15 is peeled off and removed from the rubber hose 10 using a peeling machine 29. The mandrel 14 is then pulled out and the rubber hose is obtained.

In a specific example, an unvulcanized rubber hose comprising two reinforcement layers with an inner diameter of 10 mm and an outer diameter of 20 mm, an inner rubber tube made of nitrile-butadiene rubber, an outer rubber tube of chloroprene rubber and a braid of nylon yarn in the reinforcement was first manufactured.

Then, polymethylpentene was uniformly applied over the unvulcanized rubber hose to a thickness of 1.5 mm as a resin layer. After subjecting the rubber hose to initial vulcanization using 2.5 KW microwave to cure rubber, the rubber hose was vulcanized in a vulcanizing tank at 200°C for 7 minutes. Finally, the resin layer was peeled off and the mandrel was pulled out. The rubber hose thus obtained has sufficient performance as a pressure hose, and an excellent appearance without foaming of the rubber.

The above method thus has the following advantages over the prior art.

(1) Because of the steps of curing rubber during the initial vulcanization by microwaves heating and of subsequently completing vulcanization in the vulcanizing tank at an elevated temperature for a prescribed period of time, foaming of the rubber can be prevented by the resin layer. This eliminates provision of a special sealing mechanism and pressurizing means in the vulcanizing apparatus.

(2) Because microwaves are used in the initial vulcanization of the rubber, the resin layer itself is not heated but is maintained in its hardened state. Thus, when compared with the conventional vulcanization which solely depends on heat conduction of the hot heating medium in the vulcanizing tank, the resin layer can be made much thinner to prevent foaming of the rubber and the quantity of resin used can be reduced.

(3) Because the rubber material itself is selectively caused to generate heat from inside in a short period of time as it absorbs microwaves energy, it requires less time in vulcanization. This means that the vulcanizing tank can be made shorter in lenght. As a result, the thermal energy necessary for operating the tank can be saved.

(4) Because the resin layer hardly generates heat or softens but maintains its hardened state during microwave vulcanization, there is no danger of the rubber hose being deformed or curved.

(5) Because the resin layer is not adhered to the hose material, it can be pulverized and put to repeated use after it has been removed.

(6) When compared with conventional vulcanization which employs lead coating, the above method will not harm the environment or persons.

## Claims

1, A method of continuously vulcanizing hoses, comprising the steps of:

(a) covering the outer periphery of an extruded unvulcanized rubber hose with a heat-resistant resin layer (15) which has a melting point higher than the vulcanizing temperature,

(b) maintaining the rubber hose at an elevated temperature in a hot vulcanizing tank (26) until vulcanization is completed by heat conduction of the heating medium in the tank, and

(c) removing the heat-resistant resin layer and an inner mandrel (14),

characterized in that the resin layer (15) has a low microwave absorption loss, after step (a) and before step (b) the rubber hose is heated in a microwave vulcanizing tank (25) to subject the rubber to initial vulcanization, and in step (b) the rubber hose is maintained under normal pressure.

2. The method of claim 1, wherein the heat-resistant resin layer (15) is of polytetrafluoroethylene.

3. The method of claim 1, wherein the heat-resistant resin layer (15) is of polymethylpentene.

4. The methof of claims 1 to 3, wherein the thickness of the heat-resistant resin layer (15) is between 1 mm and 2 mm.

## Patentansprüche

1. Verfahren zum kontinuierlichen Vulkanisieren von Schläuchen, enthaltend die Schritte:

(a) Überziehen des Außenumfanges eines extrudierten unvulkanisierten Gummischlauches mit einer hitzbeständigen Harz-Schicht, deren Schmelzpunkt höher als die Vulkanisier-Temperatur ist,

(b) Halten des Gummischlauchs auf einer erhöhten Temperatur in einem Heiß-Vulkanisier-Tank (26), bis die Vulkanisation durch Wärmeleitung des Heizmediums im Tank vollendet ist, und

(c) Entfernen der hitzbeständigen Harz-Schicht und eines inneren Dornes (14),

dadurch gekennzeichnet, daß die Harz-Schicht (15) einen geringen Mikrowellen-Absorptions-Verlust hat, daß der Gummischlauch nach dem Schritt (a) und vor dem Schritt (b) in einem Mikrowellen-Vulkanisier-Tank (25) erhitzt wird, um den Gummi einer Anfangsvulkanisation zu unterwerfen, und daß der Gummischlauch beim Schritt (b) unter normalem Druck gehalten wird.

2. Verfahren nach Anspruch 1, dadurch gekennzeichnet, daß die hitzbeständige Harz-Schicht (15) aus Polytetrafluoräthylen besteht.

3. Verfahren nach Anspruch 1, dadurch gekennzeichnet, daß die hitzbeständige Harz-Schicht (15) aus Polymethylpenten besteht.

4. Verfahren nach einem der Ansprüche 1 bis 3, dadurch gekennzeichnet, daß die Dicke der hitzbeständigen Harz-Schicht (15) zwischen 1 mm und 2 mm liegt.

## Revendications

1. Procédé de vulcanisation continue de tuyauteries souples, comprenant les étapes suivantes:

(a) le recouvrement de la périphérie externe d'une tuyauterie souple extrudée de caoutchouc non vulcanisé par une couche (15) de résine résistant à la chaleur ayant une température de fusion supérieure à la température de vulcanisation,

(b) le maintien de la tuyauterie souple de caoutchouc à une température élevée dans un réservoir (26) de vulcanisation à chaud jusqu'à ce que la vulcanisation soit terminée par conduction de la chaleur du fluide de chauffage présent dans les réservoir, et

(c) l'enlèvement de la couche de résine résistant à la chaleur et d'un mandrin interne (14),

caractérisé en ce que la couche de résine (15) a de faibles pertes par absorption des hyperfréquences, en ce que, après l'étape (a) et avant l'étape (b), la tuyauterie souple de caoutchouc est chauffée dans un réservoir (25) de vulcanisation par des hyperfréquences afin que le caoutchouc soit soumis à une vulcanisation initiale, et en ce que, dans l'étape (b), la tuyauterie souple de caoutchouc est maintenue à pression normale.

2. Procédé selon la revendication 1, dans lequel la couche (15) de résine résistant à la chaleur est formée de polytétrafluoréthylène.

3. Procédé selon la revendication 1, dans lequel la couche (15) de résine résistant à la chaleur est formée de polyméthylpentène.

4. Procédé selon l'une quelconque des revendications 1 à 3, dans lequel l'épaisseur de la couche (15) de résine résistant à la chaleur est comprise entre 1 et 2 mm.

# F I G. I

# F I G. 2

EP 0 205 707 B1